# EUROPÄISCHE PATENTSCHRIFT

(11) **EP 2 513 461 B1**
(45) Veröffentlichungstag und Bekanntmachung des Hinweises auf die Patenterteilung: **19.05.2021**
(21) Anmeldenummer: 10803553.6
(22) Anmeldetag: 17.12.2010
(51) Int. Cl.: F02F 3/00

(54) **KOLBEN FÜR EINEN VERBRENNUNGSMOTOR**
PISTON FOR AN INTERNAL COMBUSTION ENGINE
PISTON POUR UN MOTEUR À COMBUSTION INTERNE

(30) Priorität: 18.12.2009 DE 102009059056
(43) Veröffentlichungstag der Anmeldung: 24.10.2012
(73) Patentinhaber: MAHLE International GmbH, 70376 Stuttgart (DE)
(72) Erfinder: ISSLER, Wolfgang, 71409 Schwaikheim (DE); KEMNITZ, Peter, 71397 Leutenbach (DE)
(74) Vertreter: BRP Renaud & Partner mbB Rechtsanwälte Patentanwälte Steuerberater
(86) Internationale Anmeldenummer: PCT/DE2010/001484
(87) Internationale Veröffentlichungsnummer: WO 2011/072657

(56) Entgegenhaltungen:
- EP-A1- 0 838 587
- EP-A2- 0 251 393
- WO-A1-2007/031188
- DE-A1- 10 106 578
- DE-A1-102007 020 447
- DE-A1-102008 018 850
- US-A- 1 763 523

## Beschreibung

Die vorliegende Erfindung betrifft einen Kolben für einen Verbrennungsmotor, mit einem Kolbenboden, einem umlaufenden Feuersteg und einer Ringnuten aufweisenden umlaufenden Ringpartie sowie mit einem Kolbenschaft, der zwei Schaftwände und zwei gegenüber der Ringpartie zurückgesetzte, die Schaftwände verbindende Kastenwände aufweist, derart dass im Bereich der Kastenwände jeweils eine freistehende Unterseite der Ringpartie gebildet ist, wobei die Kastenwände mit Nabenbohrungen aufweisenden Bolzennaben versehen sind.

Ein gattungsgemäßer Kolben ist aus der internationalen Patentanmeldung WO 2008/128611 A1 sowie aus der europäischen Patentanmeldung EP 0 838 587 A1 bekannt. Kolben dieser Bauweise werden auch als Kastenkolben bezeichnet. Bei typischen Kastenkolben sind zwei einander gegenüber liegende Wände des Kolbenschaftes gegenüber der äußeren Kontur des Kolbens zurückgesetzt. Die zurückgesetzten Wände werden als Kastenwände bezeichnet, die beiden anderen nicht zurückgesetzten Wände sind die Schaftwände und weisen die eigentliche Lauffläche des Kolbenschaftes auf. In die Kastenwände sind die Bolzennaben mit den Nabenbohrungen integriert. Die Kastenwände und die Schaftwände sind mit der Unterseite des Kolbenbodens verbunden.

Bei derartigen Kastenkolben tritt das Problem auf, dass im Motorbetrieb durch den Gasdruck und den Zünddruck so große Kräfte auf den Kolben einwirken, dass Deformationen am Kolben auftreten. Besonders nachteilig ist hierbei, dass die Ringpartie nur im Bereich der Schaftwände unterstützt ist, im Bereich der Kastenwände jedoch eine freistehende, überhängende Unterseite aufweisen. Dies hat zur Folge, dass die Ringpartie im Bereich der Kastenwände deutlich in Richtung des Kurbelgehäuses deformiert wird. Die Ringpartie im Bereich der Schaftwände wird dagegen infolge der steifen Konstruktion der Kastenwände und der Schaftwände nur geringfügig deformiert. Es liegt daher ein Steifigkeitssprung in dem Bereich vor, in dem die Kastenwände in die Schaftwände übergehen. Dadurch und durch das bei der Deformation der Ringpartie im Bereich der Kastenwände auftretende Biegemoment treten Spannungen auf, durch die der Kastenkolben übermäßig belastet wird. Insbesondere in dem Fall, in dem der Kastenkolben aus einem Oberteil und einem Unterteil besteht, die miteinander verschweißt sind, wird die Schweißnaht bzw. werden die Schweißnähte besonders stark belastet, was zum Aufbrechen der Schweißnaht im Bereich der Übergänge zwischen einer Kastenwand und einer Schaftwand führen kann. In dem Fall, dass der Kolben ferner einen umlaufenden Kühlkanal im Bereich der Ringpartie aufweist, wird dadurch die Stabilität der Ringpartie weiter reduziert, so dass im Motorbetrieb eine besonders deutliche Deformation beobachtet wird.

Vor diesem Hintergrund ist aus der DE 10 2007 020 447 A1 ein Kolben bekannt, bei welchem zwischen einer freistehenden Unterseite der Ringpartie und der ihr zugeordneten Kastenwand ein Stützelement vorhanden ist, das als Rippe mit bogenförmiger Geometrie ausgebildet ist.

DE 10 2007 020 447 A1 offenbart einen Kolben nach dem Oberbegriff des Anspruchs 1.

Die Aufgabe der vorliegenden Erfindung besteht somit darin, einen gattungsgemäßen Kastenkolben so weiterzubilden, dass die Belastung durch das im Motorbetrieb auftretende Biegemoment im Bereich der Ringpartie reduziert wird und dass eine Stützwirkung und eine Kraftübertragung optimiert werden.

Die Lösung besteht darin, dass zwischen jeder freistehenden Unterseite der Ringpartie und der ihr zugeordneten Kastenwand mindestens ein Stützelement angeordnet ist, und dass das mindestens eine Stützelement sich über die gesamte radiale Breite der freistehenden Unterseite der Ringpartie erstreckt, wobei das mindestens einen Stützelement tetraederförmig und im Querschnitt dreieckig oder trapezförmig ausgebildet ist.

Es hat sich überraschend herausgestellt, dass durch die Anbindung der freistehenden Unterseiten der Ringpartie an die Kastenwände mit Hilfe mindestens eines Stützelements, dass sich über die gesamte radiale Breite der freistehenden Unterseite der Ringpartie erstreckt, die auf den erfindungsgemäßen Kolben wirkende Belastung deutlich reduziert wird, weil die Ringpartie in diesem Bereich im Motorbetrieb weniger stark deformiert wird. Insbesondere bei mehrteiligen geschweißten Kolben wird die Belastung der Schweißnähte deutlich vermindert und die Bauteilsicherheit entsprechend erhöht. Es entfällt die Notwendigkeit, die Ringpartie zu verstärken und/oder die Kastenwände radial nach außen zu versetzen. Die durch das mindestens eine Stützelement bedingte Vergrößerung des Gewichts des Kastenkolbens ist minimal.

Vorteilhafte Weiterbildungen ergeben sich aus den Unteransprüchen.

Eine vorteilhafte Weiterbildung besteht darin, dass zwischen jeder freistehenden Unterseite der Ringpartie und der ihr zugeordneten Kastenwand genau ein oberhalb der Nabenbohrung angeordnetes Stützelement vorgesehen ist. Eine wirksame Reduzierung der Durchbiegung wird bereits dadurch erzielt, dass genau ein Stützelement im Bereich der maximalen Durchbiegung der Ringpartie diese an die Kastenwand anbindet.

Jedes Stützelement kann sich in umlaufender Richtung über die gesamte Kastenwand erstrecken. Dies resultiert in einer besonders wirksamen Versteifung der Ringpartie.

Eine besonders bevorzugte Weiterbildung besteht darin, dass zwischen jeder freistehenden Unterseite der Ringpartie und der ihr zugeordneten Kastenwand genau zwei Stützelemente vorgesehen sind, die beidseits der Nabenbohrung angeordnet sind. Dadurch wird eine sehr wirksame Versteifung der Ringpartie im Bereich der Kastenwände erzielt und, zugleich wird ein optimales Verhältnis zwischen der Versteifung einerseits und dem Gewicht des Kolbens andererseits erreicht.

Die Stützelemente können sich so weit über die Kastenwände erstrecken, dass sie die Nabenbohrung zumindest teilweise umschließen. Dadurch können die auf die Ringpartie wirkenden Kräfte besonders effektiv in die Kastenwände abgeleitet werden.

Erfindungsgemäß ist das mindestens eine Stützelement tetraederförmig und im Querschnitt dreieckig oder trapezförmig ausgebildet. Dabei werden die Stützwirkung und die Kraftübertragung optimiert.

Die vorliegende Erfindung ist für alle Bautypen von Kastenkolben geeignet. Sie kann insbesondere bei mehrteiligen Kolben zum Einsatz kommen, die ein Kolbenoberteil und ein das mindestens eine Stützelement umfassendes Kolbenunterteil aufweisen, die mittels eines geeigneten Schweißverfahrens miteinander verbunden sind. Durch das erfindungsgemäße mindestens eine Stützelement wird die Belastung der Schweißnähte, die von den bei der Durchbiegung der Ringpartie im Bereich der Kastenwände auftretenden Biegemomenten verursacht wird, deutlich reduziert, so dass die Bauteilsicherheit derartiger Kolben wesentlich verbessert wird. Der Kolben kann aus beliebigen Werkstoffen hergestellt sein, insbesondere aus einem Stahlwerkstoff.

Ein Ausführungsbeispiel der vorliegenden Erfindung wird im Folgenden anhand der beigefügten Zeichnungen näher erläutert. Es zeigen in einer schematischen, nicht maßstabsgetreuen Darstellung:
- Figur 1: eine perspektivische Darstellung eines Ausführungsbeispiels eines erfin-dungsgemäßen Kolbens;
- Figur 2: den Kolben gemäß Figur 1 in einer Frontansicht;
- Figur 3: den Kolben gemäß Figur 1 in einer gegenüber Figur 2 um 90° gedrehten Seitenansicht;
- Figur 4: einen Schnitt entlang der Linie IV - IV in Figur 2.

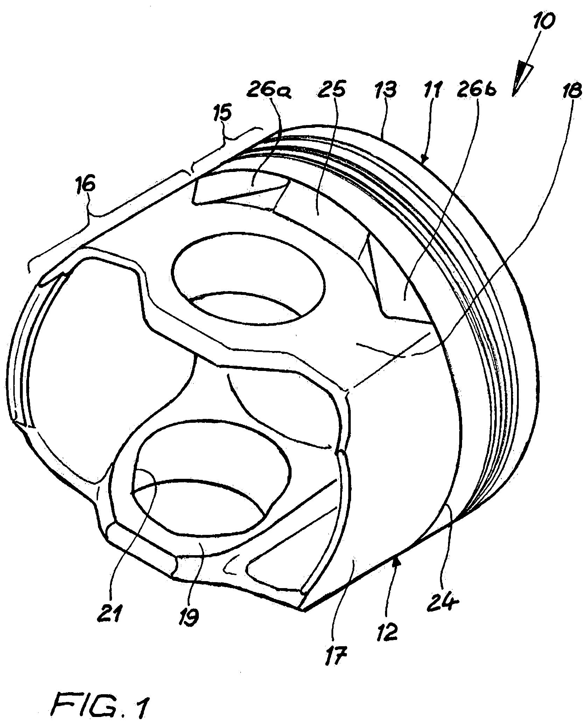

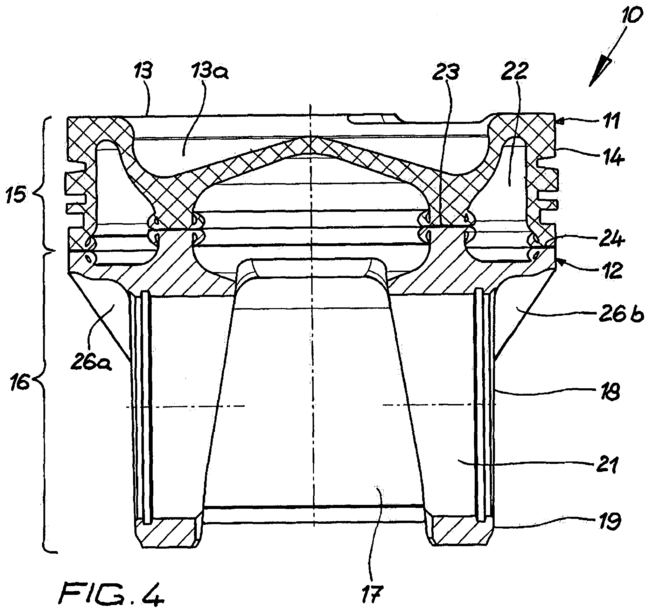

Die Figuren 1 bis 4 zeigen ein Ausführungsbeispiel eines erfindungsgemäßen Kolbens 10, der im Ausführungsbeispiel aus einem Stahlwerkstoff geschmiedet ist. Der erfindungsgemäße Kolben 10 ist im Ausführungsbeispiel ein zweiteiliger Kolben. Er setzt sich zusammen aus einem Kolbenoberteil 11 und einem Kolbenunterteil 12. Das Kolbenoberteil 11 weist einen Kolbenboden 13 mit einer Verbrennungsmulde 13a und eine umlaufende, einen Feuersteg 14 einschließenden, Ringpartie 15 auf. Das Kolbenunterteil 12 weist einen Kolbenschaft 16 auf, der an der Unterseite des Kolbenbodens 13 angebunden ist. Der Kolbenschaft 16 weist zwei Schaftwände 17 und zwei gegenüber der Ringpartie 15 zurückgesetzte, die Schaftwände 17 verbindende Kastenwände 18 auf. Dadurch ist eine freistehende Unterseite 25 der Ringpartie 15 gebildet. Die Außenumfangsfläche jeder Schaftwand 17 stellt eine Lauffläche des Kolbenschaftes 16 dar. Jede Kastenwand 18 weist eine mit einer Nabenbohrung 21 versehene Bolzennabe 19 auf.

Das Kolbenoberteil 11 und das Kolbenunterteil 12 bilden im Bereich der Ringpartie einen umlaufenden äußeren Kühlkanal 22.

Das Kolbenoberteil 11 und das Kolbenunterteil 12 sind im Ausführungsbeispiel in an sich bekannter Weise mittels eines geeigneten Verbindungsverfahrens, bspw. durch Reibschweißen, verbunden. Dadurch werden eine innere umlaufende Schweißnaht 23 und eine äußere umlaufende Schweißnaht 24 gebildet.

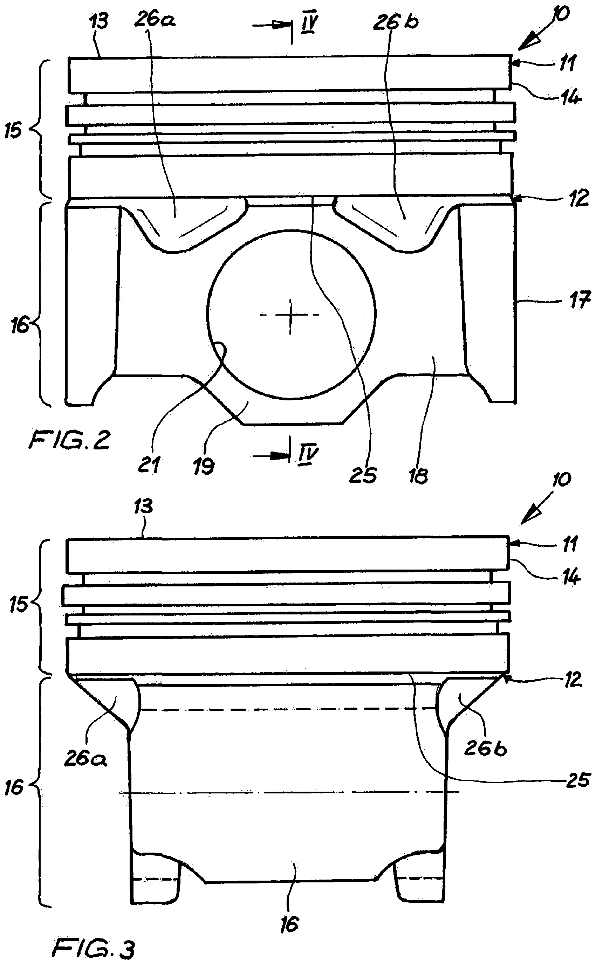

Im Ausführungsbeispiel ist jede freistehende Unterseite 25 der Ringpartie 15 mittels zweier Stützelemente 26a, 26b an die ihr zugeordnete Kastenwand 18 angebunden. Die Stützelemente 26a, 26b sind im Ausführungsbeispiel einstückig an das Kolbenunterteil 12 angeformt, bspw. geschmiedet und beidseits jeder Nabenbohrung 21 angeordnet. Die Stützelemente 26a, 26b sind etwa tetraederförmig mit in etwa dreieckigem Querschnitt ausgebildet, wobei die Spitze jedes Stützelements 26a, 26b, zur Nabenbohrung 21 der jeweiligen Kastenwand 18 ausgerichtet ist. Die Basis jedes etwa tetraederförmigen Stützelements 26a, 26b erstreckt sich entlang der freistehenden Unterseite 25 der Ringpartie 15 und ist im Ausführungsbeispiel so bemessen, dass jedes Stützelement 26a, 26b sich über die gesamte radiale Breite der freistehenden Unterseite 25 der Ringpartie 15 erstreckt (vgl. Figuren 1 und 3).

Selbstverständlich kann auch nur ein Stützelement vorgesehen sein, das oberhalb der Nabenbohrung 21 angeordnet ist. In jedem Fall bewirken die Stützelemente, dass die Deformation der Ringpartie 15 im Motorbetrieb wesentlich reduziert wird. Damit werden die aus dieser Deformation resultierenden Spannungen, die insbesondere im Übergangsbereich zwischen jeder Schaftwand 17 und jeder Kastenwand 18 auftreten, ebenfalls reduziert. Dies hat zur Folge, dass die Beanspruchung der Schweißnähte 23, 24 wie auch des Kolbenbodens stark vermindert und die Bauteilsicherheit des erfindungsgemäßen Kolbens 10 deutlich erhöht wird.

## Patentansprüche

1. Kolben (10) für einen Verbrennungsmotor, mit einem Kolbenboden (13), einem umlaufenden Feuersteg (14) und einer Ringnuten aufweisenden umlaufenden Ringpartie (15) sowie mit einem Kolbenschaft (16), der zwei Schaftwände (17) und zwei gegenüber der Ringpartie (15) zurückgesetzte, die Schaftwände (17) verbindende Kastenwände (18) aufweist, derart dass im Bereich der Kastenwände (18) jeweils eine freistehende Unterseite (25) der Ringpartie (15) gebildet ist,
wobei die Kastenwände (18) mit Nabenbohrungen (21) aufweisenden Bolzennaben (19) versehen sind,
wobei zwischen jeder freistehenden Unterseite (25) der Ringpartie (15) und der ihr zugeordneten Kastenwand (18) mindestens ein Stützelement (26a, 26b) angeordnet ist, und dass das mindestens eine Stützelement (26a, 26b) sich über die gesamte radiale Breite der freistehenden Unterseite (25) der Ringpartie (15) erstreckt,
**dadurch gekennzeichnet, dass**
- das mindestens eine Stützelement (26a, 26b) tetraederförmig ausgebildet ist,
- das mindestens eine Stützelement (26a, 26b) im Querschnitt dreieckig oder trapezförmig ausgebildet ist.

2. Kolben nach Anspruch 1, **dadurch gekennzeichnet, dass** zwischen jeder freistehenden Unterseite (25) der Ringpartie (15) und der ihr zugeordneten Kastenwand (18) genau ein oberhalb der Nabenbohrung (21) angeordnetes Stützelement vorgesehen ist.

3. Kolben nach Anspruch 2, **dadurch gekennzeichnet, dass** sich jedes Stützelement in umlaufender Richtung über die gesamte Kastenwand erstreckt.

4. Kolben nach Anspruch 1, **dadurch gekennzeichnet, dass** zwischen jeder freistehenden Unterseite (25) der Ringpartie (15) und der ihr zugeordneten Kastenwand (18) genau zwei Stützelemente (26a, 26b) vorgesehen sind, die beidseits der Nabenbohrung (21) angeordnet sind.

5. Kolben nach Anspruch 4, **dadurch gekennzeichnet, dass** die Stützelemente (26a, 26b) sich so weit über die Kastenwände (18) erstrecken, dass sie die Nabenbohrung (21) zumindest teilweise umschließen.

6. Kolben nach Anspruch 1, **dadurch gekennzeichnet, dass** er ein Kolbenoberteil (11) und ein das mindestens eine Stützelement (26a, 26b) umfassendes Kolbenunterteil (12) aufweist, die mittels Schweißen miteinander verbunden sind.

7. Kolben nach Anspruch 1, **dadurch gekennzeichnet, dass** der Kolben (10) aus einem Stahlwerkstoff hergestellt ist.

## Claims

1. Piston (10) for an internal combustion engine, having a piston head (13), a circumferential top land (14), and a circumferential ring belt (15) that has ring grooves, and having a piston shaft (16) that has two shaft walls (17) and two box walls (18) that are recessed relative to the ring belt (15) and connect the shaft walls (17), in such a manner that an exposed underside (25) of the ring belt (15) is formed in the region of each of the box walls (18),
wherein the box walls (18) are provided with pin hubs (19) that have hub bores (21),
wherein at least one support element (26a, 26b) is disposed between each exposed underside (25) of the ring belt (15) and the box wall (18) assigned to the ring belt, and in that the at least one support element (26a, 26b) extends over the entire radial width of the exposed underside (25) of the ring belt (15),
**characterised in that**
- the at least one support element (26a, 26b) is tetrahedron-shaped,
- the at least one support element (26a, 26b) is triangular or trapezoidal in cross-section.

2. Piston according to claim 1, **characterised in that** precisely one support element disposed above the hub bore (21) is provided between each exposed underside (25) of the ring belt (15) and the box wall (18) assigned to the ring belt

3. Piston according to claim 2, **characterised in that** each support element extends over the entire box wall in the circumferential direction.

4. Piston according to claim 1, **characterised in that** precisely two support elements (26a, 26b) disposed on both sides of the hub bore (21) are provided between each exposed underside (25) of the ring belt (15) and the box wall (18) assigned to the ring belt.

5. Piston according to claim 4, **characterised in that** the support elements (26a, 26b) extend so far over the box walls (18) that they enclose the hub bore (21) at least in part.

6. Piston according to claim 1, **characterised in that** it has an upper piston part (11) and a lower piston part (12) comprising the at least one support element (26a, 26b), said upper piston part and said lower piston part being connected with one another by means of welding.

7. Piston according to claim 1, **characterised in that** the piston (10) is produced from a steel material.

## Revendications

1. Piston (10) pour un moteur à combustion interne, avec un fond de piston (13), un cordon de feu périphérique (14) et une partie annulaire (15) périphérique présentant des rainures annulaires ainsi qu'avec une tige de piston (16), qui présente deux parois de tige (17) et deux parois à fenêtre (18) en retrait par rapport à la partie annulaire (15), reliant les parois de tige (17), de telle sorte que respectivement un côté inférieur libre (25) de la partie annulaire (15) est formé dans la zone des parois à fenêtre (18),
dans lequel les parois à fenêtre (18) sont pourvues de bossages d'axe (19) présentant des orifices de bossage (21),
dans lequel au moins un élément d'appui (26a, 26b) est disposé entre chaque côté inférieur libre (25) de la partie annulaire (15) et la paroi à fenêtre (18) associée à celui-ci, et que l'au moins un élément d'appui (26a, 26b) s'étend sur toute la largeur radiale du côté inférieur libre (25) de la partie annulaire (15),
**caractérisé en ce que**
- l'au moins un élément d'appui (26a, 26b) est réalisé en forme de tétraèdre,
- l'au moins un élément d'appui (26a, 26b) est réalisé de manière triangulaire ou en forme de trapèze en section transversale.

2. Piston selon la revendication 1, **caractérisé en ce qu'**exactement un élément d'appui disposé au-dessus de l'orifice de bossage (21) est prévu entre chaque côté inférieur libre (25) de la partie annulaire (15) et la paroi à fenêtre (18) associée à celui-ci.

3. Piston selon la revendication 2, **caractérisé en ce que** chaque élément d'appui s'étend dans la direction périphérique sur toute la paroi à fenêtre.

4. Piston selon la revendication 1, **caractérisé en ce qu'**exactement deux éléments d'appui (26a, 26b) sont prévus entre chaque côté inférieur libre (25) de la partie annulaire (15) et la paroi à fenêtre (18) associée à celui-ci, qui sont disposés des deux côtés de l'orifice de bossage (21).

5. Piston selon la revendication 4, **caractérisé en ce que** les éléments d'appui (26a, 26b) s'étendent sur les parois à fenêtre (18) à un point tel qu'ils entourent au moins en partie l'orifice de bossage (21).

6. Piston selon la revendication 1, **caractérisé en ce qu'**il présente une partie supérieure de piston (11) et une partie inférieure de piston (12) comprenant l'au moins un élément d'appui (26a, 26b), qui sont reliées l'une à l'autre au moyen d'un soudage.

7. Piston selon la revendication 1, **caractérisé en ce que** le piston (10) est fabriqué à partir d'un matériau en acier.
